# EUROPÄISCHE PATENTSCHRIFT

(11) **EP 1 176 508 B1**
(45) Veröffentlichungstag und Bekanntmachung des Hinweises auf die Patenterteilung: **11.11.2015**
(21) Anmeldenummer: 01118170.8
(22) Anmeldetag: 26.07.2001
(51) Int. Cl.: G06F 11/18, G06F 13/00, B60T 8/00

(54) **Anordnung zur Überwachung des ordnungsgemässen Betriebes von die selben oder einander entsprechende Aktionen ausführenden Komponenten eines elektrischen Systems**
Arrangement for monitoring the correct operation of components which execute the same or corresponding action in an electrical system
Dispositif visant la surveillance du bon fonctionnement de composants exécutant la même action ou des actions correspondantes dans un système électrique

(30) Priorität: 27.07.2000 DE 10036598
(43) Veröffentlichungstag der Anmeldung: 30.01.2002
(73) Patentinhaber: Infineon Technologies AG, 85579 Neubiberg (DE)
(72) Erfinder: Von Wendorff, Wilhard, Dr., 81241 München (DE)
(74) Vertreter: Jannig, Peter

(56) Entgegenhaltungen:
- WO-A-92/03787
- US-A- 4 967 347
- US-A- 5 577 199
- US-A- 5 812 757

## Beschreibung

Die vorliegende Erfindung betrifft eine Vorrichtung gemäß dem Oberbegriff des Patentanspruchs 1.

Systeme, die mehrere Komponenten aufweisen, die die selben oder einander entsprechende Aktionen ausführenden, sind insbesondere ausfallsichere Systeme (fail safe systems) oder fehlertolerante Systeme (failure tolerant systems).

Die die selben oder einander entsprechende Aktionen ausführenden Systemkomponenten, welches im einfachsten Fall identisch aufgebaute und identisch betriebene Systemkomponenten (beispielsweise identisch aufgebaute und identisch betriebene Mikroprozessoren oder Mikrocontroller) sind, ermöglichen es, in den Systemkomponenten auftretende Fehler zu erkennen und so darauf zu reagieren, daß das System fehlerfrei weiterarbeiten kann oder deaktiviert wird.

Die Überprüfung, ob in einer der mehreren Systemkomponenten, die die selben oder einander entsprechende Aktionen ausführen, ein Fehler aufgetreten ist, erfolgt im allgemeinen dadurch, daß überprüft wird, ob diese Systemkomponenten identische oder einander entsprechende Ergebnisse oder Zwischenergebnisse liefern.

Diese Überprüfung kann
- durch in den zu überprüfenden Systemkomponenten integrierte Überwachungseinrichtungen, oder
- durch eine außerhalb der zu überprüfenden Systemkomponenten vorgesehene, für alle Systemkomponenten gemeinsame Überwachungseinrichtung
   erfolgen.
   Wenn durch eine der Überwachungseinrichtungen festgestellt wird, daß die einander gegenüberzustellenden Daten (ausgewählte Ergebnisse oder Zwischenergebnisse der zu überwachenden Systemkomponenten, oder diese repräsentierende Daten) voneinander abweichen oder einander nicht entsprechen, wird
- die fehlerhafte Systemkomponente deaktviert und gegebenenfalls durch eine der anderen Systemkomponenten ersetzt (bei failure tolerant systems), oder
- das gesamte System deaktiviert (bei fail safe systems).

Dadurch kann vermieden werden, daß ein Fehler in einer der Systemkomponenten zu einem Ausfall des Systems führt und/oder die Sicherheit des Systems gefährdet.

Die Erfahrung zeigt jedoch, daß dies nicht unter allen Umständen zuverlässig gewährleistet ist.

Weiterer Stand der Technik ist aus den Dokumenten WO 92/03787 A, US-A-5 812 757 und US 4 967 347 A bekannt. Diesen Dokumenten ist jedoch keine zufriedenstellende Lösung des vorstehend erwähnten Problems entnehmbar.

Der vorliegenden Erfindung liegt daher die Aufgabe zugrunde, die Anordnung gemäß dem Oberbegriff des Patentanspruchs 1 derart weiterzubilden, daß unter allen Umständen zuverlässig und schnell auf auftretende Fehler reagiert werden kann.

Diese Aufgabe wird erfindungsgemäß durch die im kennzeichnenden Teil des Patentanspruchs 1 beanspruchten Merkmale gelöst.

Vorteilhafte Weiterbildungen der Erfindung sind den Unteransprüchen, der folgenden Beschreibung und den Figuren entnehmbar.

Die Erfindung wird nachfolgend anhand von Ausführungsbeispielen unter Bezugnahme auf die Figuren näher erläutert. Es zeigen
- Figur 1: ein System mit einem ersten Ausführungsbeispiel der nachfolgend näher beschriebenen Anordnung zur Überwachung des ordnungsgemäßen Betriebes von die selben oder einander entsprechende Aktionen ausführenden Komponenten eines elektrischen Systems, und
- Figur 2: ein System mit einem zweiten Ausführungsbeispiel der nachfolgend näher beschriebenen Anordnung zur Überwachung des ordnungsgemäßen Betriebes von die selben oder einander entsprechende Aktionen ausführenden Komponenten eines elektrischen Systems.

Die im folgenden beschriebene Anordnung soll im betrachteten Beispiel die ordnungsgemäße Funktion eines Anti-Blockier-Systems eines Kraftfahrzeuges gewährleisten. Genauer gesagt soll sie überwachen, ob die selben oder einander entsprechende Aktionen ausführende Komponenten des Anti-Blockier-Systems tatsächlich die selben oder einander entsprechende Aktionen ausführen oder ausführen werden.

Die die selben oder einander entsprechende Aktionen ausführenden Komponenten sind insbesondere
- identisch aufgebaute und identisch betriebene Systemkomponenten, oder
- Systemkomponenten, die zwar nicht identisch aufgebaut sind und/oder identisch betrieben werden, aber die selben oder einander entsprechende Ergebnisse oder Zwischenergebnisse liefern, oder
- Systemkomponenten, die zwar nicht die selben oder einander entsprechende Ergebnisse oder Zwischenergebnisse liefern, aber die selbe oder einander entsprechende Wirkungen entfalten.

Die beschriebene Anordnung zeichnet sich dadurch aus, daß jeder der zu überwachenden Systemkomponenten mindestens eine unabhängig von den zu überwachenden Systemkomponenten betreibbare eigene Überwachungseinrichtung zugeordnet ist.

Die Überwachungseinrichtungen
- erhalten von den zu überwachenden Systemkomponenten zur Überprüfung des ordnungsgemäßen Betriebs geeignete Kontroll-Daten,
- überprüfen, ob diese Kontroll-Daten vorgegebene Bedingungen erfüllen,
- legen abhängig vom Ergebnis der Überprüfung fest, ob und gegebenenfalls welche der zu überwachenden Systemkomponenten fehlerhaft arbeiten, und
- sorgen dafür, daß die fehlerhaften Systemkomponenten oder das gesamte System nicht mehr weiterarbeiten, falls ein Fehler erkannt wurde.

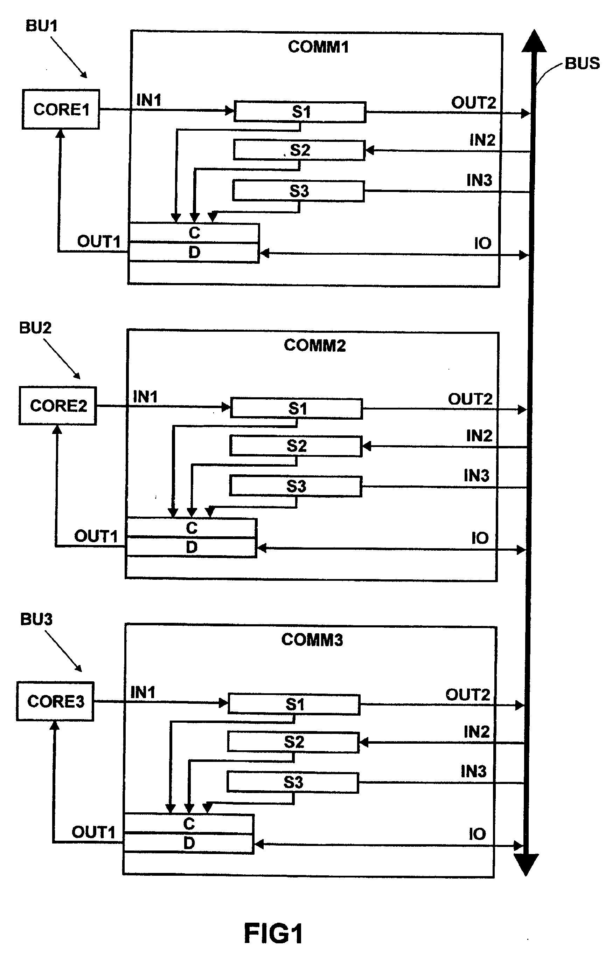

Ein System, bei welcher jeder zu überwachenden Systemkomponente eine Überwachungseinheit zugeordnet ist, ist in Figur 1 gezeigt.

Die zu überwachenden Systemkomponenten und die diesen zugeordneten Überwachungseinrichtungen sind im betrachteten Beispiel Bestandteil von verschiedenen, über einen Bus miteinander verbundenen Einheiten.

Das in der Figur 1 gezeigte System umfaßt einen Bus BUS und über diesen verbundene Bus-Einheiten BU1, BU2, und BU3, wobei jede der Bus-Einheiten BU1, BU2, und BU3 eine mit den Bezugszeichen CORE1, CORE2 bzw. CORE3 bezeichnete programmgesteuerte Einheit und einen mit den Bezugszeichen COMM1, COMM2 bzw. COMM3 bezeichneten Kommunikations-Controller enthält.

Der Vollständigkeit halber sei angemerkt, daß an den Bus BUS beliebig viele weitere Bus-Einheiten angeschlossen sein können, wobei die weiteren Bus-Einheiten einen beliebigen Aufbau und eine beliebige Funktion aufweisen können.

Bei den programmgesteuerten Einheiten CORE1, CORE2 und CORE3 handelt es sich beispielsweise um Mikroprozessoren, Mikrocontroller oder Signalprozessoren. Diese programmgesteuerten Einheiten CORE1, CORE2 und CORE3 sind im betrachteten Beispiel identisch aufgebaut und werden identisch betrieben.

Die die Überwachung der programmgesteuerten Einheiten CORE1, CORE2, und CORE3 durchführenden Überwachungseinrichtungen sind Bestandteil der Kommunikations-Controller COMM1, COMM2, und COMM3. Genauer gesagt ist
- die die programmgesteuerte Einheit CORE1 überwachende Überwachungseinrichtung Bestandteil des Kommunikations-Controllers COMM1,
- die die programmgesteuerte Einheit CORE2 überwachende Überwachungseinrichtung Bestandteil des Kommunikations-Controllers COMM2, und
- die die programmgesteuerte Einheit CORE3 überwachende Überwachungseinrichtung Bestandteil des Kommunikations-Controllers COMM3.

Die Kommunikations-Controller COMM1, COMM2, und COMM3 dienen dazu, zu andern Bus-Einheiten zu übertragende Daten auf den Bus BUS auszugeben, und von anderen Bus-Einheiten über den Bus BUS zu der betreffenden Bus-Einheit übertragene Daten entgegenzunehmen. In den Figuren sind von den Kommunikations-Controllern nur die darin enthaltenen Überwachungseinrichtungen dargestellt. Der Aufbau, die Funktion und die Wirkungsweise der eigentlichen Kommunikations-Controller sind bekannt und bedürfen keiner näheren Erläuterung.

Die Kommunikations-Controller COMM1, COMM2 und COMM3 enthalten jeweils eine erste Speichereinrichtung S1, eine zweite Speichereinrichtung S2, eine dritte Speichereinrichtung S3, eine Vergleichseinrichtung C, und eine Entscheidungseinrichtung D, und sind über einen Eingangsanschluß IN1 und einen Ausgangsanschluß OUT1 mit der zugeordneten (der in der selben Bus-Einheit befindlichen) programmgesteuerten Einheit, und über Eingangsanschlüsse IN2 und IN3, einen Ausgangsanschluß OUT2 und einen Ein- und Ausgabeanschluß IO mit dem Bus BUS verbunden.

Die im ersten Kommunikations-Controller COMM1 enthaltene Überwachungseinrichtung
- erhält über den Eingangsanschluß IN1 von der ihr zugeordneten programmgesteuerten Einheit CORE1 Kontroll-Daten und speichert diese in der ersten Speichereinrichtung S1,
- erhält über den Eingangsanschluß IN2 von der zweiten programmgesteuerten Einheit CORE2 stammende und vom zweiten Kommunikations-Controller COMM2 über den Bus BUS übertragene Kontroll-Daten und speichert diese in der zweiten Speichereinrichtung S2,
- erhält über den Eingangsanschluß IN3 von der dritten programmgesteuerten Einheit CORE3 stammende und vom dritten Kommunikations-Controller COMM3 über den Bus BUS übertragene Kontroll-Daten und speichert diese in der dritten Speichereinrichtung S3,
- überträgt die von der ihr zugeordneten programmgesteuerten Einheit CORE1 erhaltenen und in der ersten Speichereinrichtung S1 gespeicherten Kontroll-Daten über den Ausgangsanschluß OUT2 und den Bus BUS an den zweiten Kommunikations-Controller COMM2 und an den dritten Kommunikations-Controller COMM3,
- überprüft durch die Vergleichseinrichtung C, ob die in den Speichereinrichtungen S1 bis S3 gespeicherten Kontroll-Daten vorgegebene Bedingungen erfüllen,
- entscheidet durch die Entscheidungseinrichtung D abhängig vom Ergebnis des von der Vergleichseinrichtung C durchgeführten Vergleichs, ob die zugeordnete programmgesteuerte Einheit CORE1 in Betrieb bleibt bzw. weiterarbeiten darf oder deaktiviert werden muß,
- steuert über den Ausgangsanschluß OUT1 die zugeordnete programmgesteuerte Einheit CORE1 entsprechend der von der Entscheidungseinrichtung D getroffenen Entscheidung an,
- übermittelt die von der Entscheidungseinrichtung D getroffene Entscheidung über den Ein- und Ausgabeanschluß IO und den Bus BUS an den zweiten Kommunikations-Controller COMM2 und an den dritten Kommunikations-Controller COMM3, und
- empfängt über den Ein- und Ausgabeanschluß IO die Entscheidungen, die durch die in den Kommunikations-Controllern COMM2 und COMM3 enthaltenen Entscheidungseinrichtungen D getroffen wurden und durch die Kommunikations-Controller COMM2 und COMM3 zum ersten Kommunikations-Controller COMM1 übertragen werden.

Die im zweiten Kommunikations-Controller COMM2 enthaltene Überwachungseinrichtung
- erhält über den Eingangsanschluß IN1 von der ihr zugeordneten programmgesteuerten Einheit CORE2 Kontroll-Daten und speichert diese in der ersten Speichereinrichtung S1,
- erhält über den Eingangsanschluß IN2 von der ersten programmgesteuerten Einheit CORE1 stammende und vom ersten Kommunikations-Controller COMM1 über den Bus BUS übertragene Kontroll-Daten und speichert diese in der zweiten Speichereinrichtung S2,
- erhält über den Eingangsanschluß IN3 von der dritten programmgesteuerten Einheit CORE3 stammende und vom dritten Kommunikations-Controller COMM3 über den Bus BUS übertragene Kontroll-Daten und speichert diese in der dritten Speichereinrichtung S3,
- überträgt die von der ihr zugeordneten programmgesteuerten Einheit CORE2 erhaltenen und in der ersten Speichereinrichtung S1 gespeicherten Kontroll-Daten über den Ausgangsanschluß OUT2 und den Bus BUS an den ersten Kommunikations-Controller COMM1 und an den dritten Kommunikations-Controller COMM3,
- überprüft durch die Vergleichseinrichtung C, ob die in den Speichereinrichtungen S1 bis S3 gespeicherten Kontroll-Daten vorgegebene Bedingungen erfüllen,
- entscheidet durch die Entscheidungseinrichtung D abhängig vom Ergebnis des von der Vergleichseinrichtung C durchgeführten Vergleichs, ob die zugeordnete programmgesteuerte Einheit CORE2 in Betrieb bleibt bzw. weiterarbeiten darf oder deaktiviert werden muß,
- steuert über den Ausgangsanschluß OUT1 die zugeordnete programmgesteuerte Einheit CORE1 entsprechend der von der Entscheidungseinrichtung D getroffenen Entscheidung an,
- übermittelt die von der Entscheidungseinrichtung D getroffene Entscheidung über den Ein- und Ausgabeanschluß IO und den Bus BUS an den ersten Kommunikations-Controller COMM1 und an den dritten Kommunikations-Controller COMM3, und
- empfängt über den Ein- und Ausgabeanschluß IO die Entscheidungen, die durch die in den Kommunikations-Controllern COMM1 und COMM3 enthaltenen Entscheidungseinrichtungen D getroffen wurden und durch die Kommunikations-Controller COMM1 und COMM3 zum zweiten Kommunikations-Controller COMM2 übertragen werden.

Die im dritten Kommunikations-Controller COMM3 enthaltene Überwachungseinrichtung
- erhält über den Eingangsanschluß IN1 von der ihr zugeordneten programmgesteuerten Einheit CORE3 Kontroll-Daten und speichert diese in der ersten Speichereinrichtung S1,
- erhält über den Eingangsanschluß IN2 von der ersten programmgesteuerten Einheit CORE1 stammende und vom ersten Kommunikations-Controller COMM1 über den Bus BUS übertragene Kontroll-Daten und speichert diese in der zweiten Speichereinrichtung S2,
- erhält über den Eingangsanschluß IN3 von der zweiten programmgesteuerten Einheit CORE2 stammende und vom zweiten Kommunikations-Controller COMM2 über den Bus BUS übertragene Kontroll-Daten und speichert diese in der dritten Speichereinrichtung S3,
- überträgt die von der ihr zugeordneten programmgesteuerten Einheit CORE3 erhaltenen und in der ersten Speichereinrichtung S1 gespeicherten Kontroll-Daten über den Ausgangsanschluß OUT2 und den Bus BUS an den ersten Kommunikations-Controller COMM1 und an den zweiten Kommunikations-Controller COMM2,
- überprüft durch die Vergleichseinrichtung C, ob die in den Speichereinrichtungen S1 bis S3 gespeicherten Kontroll-Daten vorgegebene Bedingungen erfüllen,
- entscheidet durch die Entscheidungseinrichtung D abhängig vom Ergebnis des von der Vergleichseinrichtung C durchgeführten Vergleichs, ob die zugeordnete programmgesteuerte Einheit CORE3 in Betrieb bleibt bzw. weiterarbeiten darf oder deaktiviert werden muß,
- steuert über den Ausgangsanschluß OUT1 die zugeordnete programmgesteuerte Einheit CORE3 entsprechend der von der Entscheidungseinrichtung D getroffenen Entscheidung an,
- übermittelt die von der Entscheidungseinrichtung D getroffene Entscheidung über den Ein- und Ausgabeanschluß IO und den Bus BUS an den ersten Kommunikations-Controller COMM1 und an den zweiten Kommunikations-Controller COMM2, und
- empfängt über den Ein- und Ausgabeanschluß IO die Entscheidungen, die durch die in den Kommunikations-Controllern COMM1 und COMM2 enthaltenen Entscheidungseinrichtungen D getroffen wurden und durch die Kommunikations-Controller COMM1 und COMM2 zum dritten Kommunikations-Controller übertragen werden.

Die Kontroll-Daten, die die zu überwachenden Systemkomponenten an die Überwachungseinrichtungen ausgeben, sind Daten, die den Vergleichseinrichtungen C und den Entscheidungseinrichtungen D die Feststellung ermöglichen, ob die zu überwachenden Systemkomponenten identische oder einander entsprechende Aktionen ausführen; es handelt sich beispielsweise um Ergebnisse oder Zwischenergebnisse der zu überwachenden Systemkomponenten oder diese repräsentierende Daten.

Wie vorstehend bereits überprüfen die Vergleichseinrichtungen C, ob die Kontroll-Daten der jeweils zugeordneten zu überwachenden Systemkomponenten vorgegebene Bedingungen erfüllen. Im betrachteten Beispiel geschieht dies durch einen Vergleich der Kontroll-Daten der zu überwachenden Systemkomponenten.

Die Entscheidungseinrichtungen D überprüfen anhand der Vergleichsergebnisse, ob die Kontroll-Daten aller zu überwachenden Systemkomponenten gleich sind oder einander entsprechen.

Sind die Kontroll-Daten aller zu überwachenden Systemkomponenten gleich oder einander entsprechende Kontroll-Daten, so folgern die Entscheidungseinrichtungen D daraus, daß die zu überwachenden Systemkomponenten identische oder einander entsprechende Aktionen ausführen, und lassen die jeweils zugeordnete Systemkomponente weiterarbeiten.

Sind die Kontroll-Daten der zu überwachenden Systemkomponenten nicht gleich oder einander nicht entsprechende Kontroll-Daten, so folgern die Entscheidungseinrichtungen D daraus, daß eine der zu überwachenden Systemkomponenten fehlerhaft arbeitet. In diesem Fall ermitteln die Entscheidungseinrichtungen, welches die fehlerhaft arbeitende Systemkomponente ist, und hindern diese am Weiterarbeiten.

Im Beispiel erfolgte dies dadurch, daß die Entscheidungseinrichtungen
- die Kontroll-Daten ermitteln, die von den meisten Systemkomponenten ausgegeben wurden,
- festlegen, daß eine Systemkomponente, die andere Kontroll-Daten ausgegeben hat, fehlerhaft arbeitet, und
- die zugeordnete Systemkomponente nicht weiterarbeiten lassen, wenn festgestellt wurde, daß diese fehlerhaft arbeitet (bei failure tolerant systems) bzw. alle Systemkomponenten deaktivieren, wenn festgestellt wurde, daß eine der Systemkomponenten fehlerhaft arbeitet (bei fail safe systems).

Die Gefahr, daß ein vorhandener Fehler nicht erkannt wird oder daß ein Fehler erkannt wird, der überhaupt nicht vorhanden ist (daß eine der Systemkomponenten oder das gesamte System irrtümlicher Weise weiterarbeiten darf oder deaktiviert wird) ist vernachlässigbar gering.

Einer der Gründe hierfür liegt darin, daß es - anders als beim Vorsehen von nur einer einzigen, für alle Systemkomponenten gemeinsamen Überwachungseinrichtung - nicht oder jedenfalls nicht automatisch dazu kommen kann, daß eine Überwachungseinrichtungs-Fehlfunktion einen kompletten Ausfall des Systems oder der Überwachung zur Folge hat.

Ein weiterer Grund hierfür liegt darin, daß es - anders als bei der Integration der Überwachungseinrichtungen in die zu überwachenden Systemkomponenten - nicht oder jedenfalls nicht automatisch dazu kommen kann, daß ein Fehler in einer zu überwachenden Systemkomponente gleichzeitig eine Fehlfunktion der zugeordneten Überwachungseinrichtung zur Folge hat.

Hinzu kommt, daß die Entscheidungseinrichtungen D ihre Ergebnisse über die I/O-Anschlüsse der Kommunikations-Controller austauschen, und damit auch Fehler innerhalb der Überwachungseinrichtungen erkannt werden können.

Überaus vorteilhaft wird es sich auch aus, daß die zu überwachenden Systemkomponenten (und die diesen zugeordneten Überwachungseinrichtungen) in verschiedenen Bus-Einheiten, also mehr oder weniger weit voneinander entfernt vorgesehen sind. Dadurch kann verhindert werden, daß ungünstige Umgebungsbedingungen (beispielsweise eine zu hohe Temperatur, elektromagnetische Störungen, eine zu hohe oder zu niedrige oder schwankende Versorgungsspannung etc.) in mehreren oder allen zu überwachenden Systemkomponenten und/oder in mehreren oder allen Überwachungseinrichtungen den selben und dadurch eventuell nicht erkennbaren Fehler verursachen.

Eine noch sicherere Überwachung der zu überwachenden Systemkomponenten ergibt sich, wenn den zu überwachenden Systemkomponenten jeweils mehrere Überwachungseinrichtungen zugeordnet sind. Dadurch lassen sich in den zu überwachenden Systemkomponenten und in den diesen zugeordneten Überwachungseinrichtungen auftretende Fehler noch sicherer erkennen.

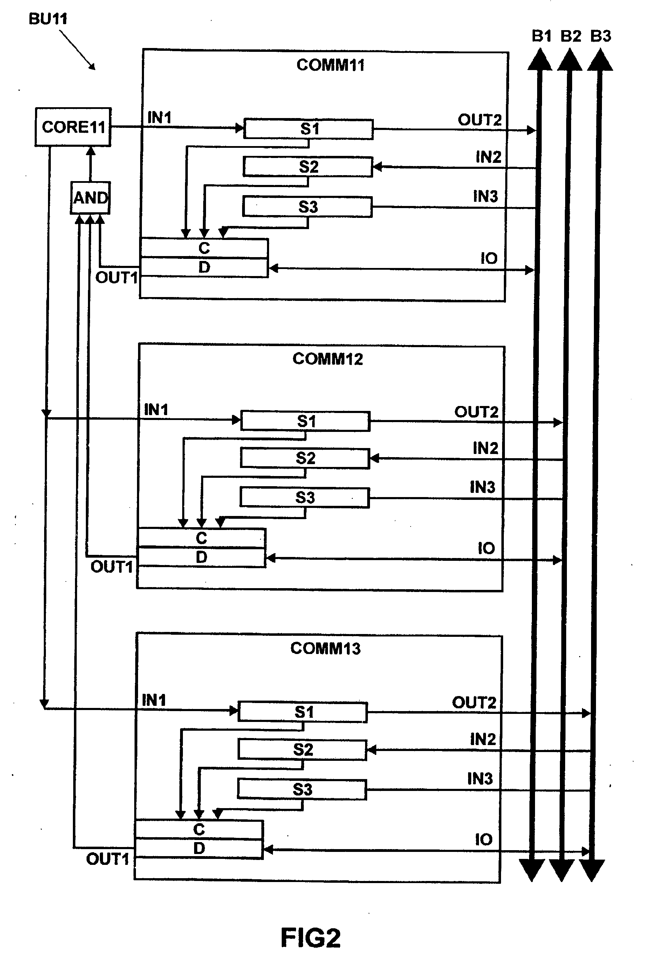

Ein System, bei welchem den zu überwachenden Systemkomponenten jeweils mehrere eigene Überwachungseinrichtungen zugeordnet sind, ist in Figur 2 gezeigt.

Das in der Figur 2 gezeigte System unterscheidet sich von dem in der Figur 1 gezeigten System zusätzlich dadurch,
- daß die Bus-Einheiten nicht "nur" über einen Bus, sondern über mehrere Busse verbunden sind, und
- die Bus-Einheiten nicht "nur" mit einem Kommunikations-Controller sondern mit mehreren Kommunikations-Controllern (einer der Anzahl der Busse entsprechenden Anzahl von Kommunikations-Controllern) ausgestattet sind, wobei jeder der Kommunikations-Controller einer jeweiligen Bus-Einheit einem anderen Bus zugeordnet ist.

Es sei bereits an dieser Stelle darauf hingewiesen, daß sich das Vorsehen von mehrere Überwachungseinrichtungen pro zu überwachender Systemkomponente auch bei Systemen als vorteilhaft erweist, die nicht über mehrere Busse, und/oder deren Bus-Einheiten nicht über mehrere Kommunikations-Controller verfügen.

Das im folgenden beschriebene und in der Figur 2 nur ausschnittsweise dargestellte System enthält drei Bus-Einheiten, von welchen aus Gründen der Übersichtlichkeit nur eine einzige Bus-Einheit BU11 dargestellt ist, und drei die Bus-Einheiten verbindende Busse B1, B2 und B3.

Jede der Bus-Einheiten enthält eine programmgesteuerte Einheit, drei Kommunikations-Controller, und ein UND-Glied. Diese Elemente sind bei der in der Figur 2 dargestellten Bus-Einheit BU11 mit den Bezugszeichen CORE11 (programmgesteuerte Einheit), COMM11, COMM12, COMM13 (Kommunikations-Controller) und AND (UND-Glied) bezeichnet.

Die Kommunikations-Controller COMM11, COMM12, und COMM13 weisen den selben Aufbau auf wie die beim System gemäß Figur 1 verwendeten Kommunikations-Controller COMM1, COMM2 und COMM3; mit den selben Bezugszeichen bezeichnete Elemente entsprechen die selben oder einander entsprechende Elemente.

Von den in den Bus-Einheiten vorgesehenen Kommunikations-Controllern ist
- jeweils ein Kommunikations-Controller, genauer gesagt dessen Anschlüsse IN2, IN3, OUT1, und IO mit dem ersten BUS B1 verbunden,
- jeweils ein Kommunikations-Controller, genauer gesagt dessen Anschlüsse IN2, IN3, OUT1, und IO mit dem zweiten BUS B2 verbunden,
- jeweils ein Kommunikations-Controller, genauer gesagt dessen Anschlüsse IN2, IN3, OUT1, und IO mit dem dritten BUS B3 verbunden.

Die Eingangsanschlüsse IN1 der jeweiligen Kommunikations-Controller sind mit den in den betreffenden Bus-Einheiten vorgesehenen programmgesteuerten Einheiten verbunden.

Die Ausgangsanschlüsse OUT1 der jeweiligen Kommunikations-Controller sind mit den Eingangsanschlüssen des UND-Gliedes AND der betreffenden Bus-Einheit verbunden.

Die Ausgangsanschlüsse der UND-Glieder AND sind mit den in der jeweilige Bus-Einheit vorgesehenen programmgesteuerten Einheit verbunden; über diese Verbindung wird die programmgesteuerte Einheit gesteuert (aktiviert oder im aktivierten Zustand belassen oder deaktiviert).

Jeder der Kommunikations-Controller enthält eine Überwachungseinrichtung.

Die im ersten Kommunikations-Controller COMM11 der Bus-Einheit BU11 enthaltene Überwachungseinrichtung
- erhält über den Eingangsanschluß IN1 von der ihr zugeordneten programmgesteuerten Einheit CORE11 Kontroll-Daten und speichert diese in der ersten Speichereinrichtung S1,
- erhält über den ersten Bus B1 und den Eingangsanschluß IN2 von der zu überwachenden programmgesteuerten Einheit der (in der Figur 2 nicht gezeigten) zweiten Bus-Einheit stammende und vom ersten Kommunikations-Controller dieser Bus-Einheit übertragene Kontroll-Daten und speichert diese in der zweiten Speichereinrichtung S2,
- erhält über den ersten Bus B1 und den Eingangsanschluß IN3 von der zu überwachenden programmgesteuerten Einheit der (in der Figur 2 nicht gezeigten) dritten Bus-Einheit stammende und vom ersten Kommunikations-Controller dieser Bus-Einheit übertragene Kontroll-Daten und speichert diese in der dritten Speichereinrichtung S3,
- überträgt die von der ihr zugeordneten programmgesteuerten Einheit CORE11 erhaltenen und in der ersten Speichereinrichtung S1 gespeicherten Kontroll-Daten über den Ausgangsanschluß OUT2 und den ersten Bus B1 an die ersten Kommunikations-Controller der zweiten Bus-Einheit und der dritten Bus-Einheit,
- überprüft durch die Vergleichseinrichtung C, ob die in den Speichereinrichtungen S1 bis S3 gespeicherten Kontroll-Daten vorgegebene Bedingungen erfüllen,
- entscheidet durch die Entscheidungseinrichtung D abhängig vom Ergebnis des von der Vergleichseinrichtung durchgeführten Vergleichs, ob die zugeordnete programmgesteuerte Einheit CORE11 in Betrieb bleiben bzw. weiterarbeiten kann oder deaktiviert werden muß,
- steuert über den Ausgangsanschluß OUT1 und das UND-Glied AND die zugeordnete programmgesteuerte Einheit CORE11 entsprechend der von der Entscheidungseinrichtung D getroffenen Entscheidung an,
- übermittelt die von der Entscheidungseinrichtung D getroffene Entscheidung über den Ein- und Ausgabeanschluß IO und den ersten Bus B1 an den zweiten Kommunikations-Controller COMM2 und an die ersten Kommunikations-Controller der zweiten Bus-Einheit und der dritten Bus-Einheit, und
- empfängt über den Ein- und Ausgabeanschluß IO die Entscheidungen, die durch die in den ersten Kommunikations-Controllern der zweiten Bus-Einheit und der dritten Bus-Einheit enthaltenen Entscheidungseinrichtungen D getroffen wurden und durch die jeweiligen Kommunikations-Controller über den ersten Bus B1 zur ersten Bus-Einheit BU11 übertragen werden.

Die im zweiten Kommunikations-Controller COMM12 enthaltene Überwachungseinrichtung
- erhält über den Eingangsanschluß IN1 von der ihr zugeordneten programmgesteuerten Einheit CORE11 Kontroll-Daten und speichert diese in der ersten Speichereinrichtung S1,
- erhält über den zweiten Bus B2 und den Eingangsanschluß IN2 von der zu überwachenden programmgesteuerten Einheit der zweiten Bus-Einheit stammende und vom zweiten Kommunikations-Controller dieser Bus-Einheit übertragene Kontroll-Daten und speichert diese in der zweiten Speichereinrichtung S2,
- erhält über den zweiten Bus B2 und den Eingangsanschluß IN3 von der zu überwachenden programmgesteuerten Einheit der dritten Bus-Einheit stammende und vom zweiten Kommunikations-Controller dieser Bus-Einheit übertragene Kontroll-Daten und speichert diese in der dritten Speichereinrichtung S3,
- überträgt die von der ihr zugeordneten programmgesteuerten Einheit CORE11 erhaltenen und in der ersten Speichereinrichtung S1 gespeicherten Kontroll-Daten über den Ausgangsanschluß OUT2 und den zweiten Bus B2 an die zweiten Kommunikations-Controller der zweiten Bus-Einheit und der dritten Bus-Einheit,
- überprüft durch die Vergleichseinrichtung C, ob die in den Speichereinrichtungen S1 bis S3 gespeicherten Kontroll-Daten vorgegebene Bedingungen erfüllen,
- entscheidet durch die Entscheidungseinrichtung D abhängig vom Ergebnis des von der Vergleichseinrichtung durchgeführten Vergleichs, ob die zugeordnete programmgesteuerte Einheit CORE11 in Betrieb bleiben bzw. weiterarbeiten kann oder deaktiviert werden muß,
- steuert über den Ausgangsanschluß OUT1 und das UND-Glied AND die zugeordnete programmgesteuerte Einheit CORE11 entsprechend der von der Entscheidungseinrichtung D getroffenen Entscheidung an,
- übermittelt die von der Entscheidungseinrichtung D getroffene Entscheidung über den Ein- und Ausgabeanschluß IO und den zweiten Bus B2 an die zweiten Kommunikations-Controller der zweiten Bus-Einheit und der dritten Bus-Einheit, und
- empfängt über den Ein- und Ausgabeanschluß IO die Entscheidungen, die durch die in den zweiten Kommunikations-Controllern der zweiten Bus-Einheit und der dritten Bus-Einheit enthaltenen Entscheidungseinrichtungen D getroffen wurden und durch die jeweiligen Kommunikations-Controller über den zweiten Bus B2 zur ersten Bus-Einheit BU11 übertragen werden.

Die im dritten Kommunikations-Controller COMM13 enthaltene Überwachungseinrichtung
- erhält über den Eingangsanschluß IN1 von der ihr zugeordneten programmgesteuerten Einheit CORE11 Kontroll-Daten und speichert diese in der ersten Speichereinrichtung S1,
- erhält über den dritten Bus B3 und den Eingangsanschluß IN2 von der zu überwachenden programmgesteuerten Einheit der zweiten Bus-Einheit stammende und vom dritten Kommunikations-Controller dieser Bus-Einheit übertragene Kontroll-Daten und speichert diese in der zweiten Speichereinrichtung S2,
- erhält über den dritten Bus B3 und den Eingangsanschluß IN3 von der zu überwachenden programmgesteuerten Einheit der dritten Bus-Einheit stammende und vom dritten Kommunikations-Controller dieser Bus-Einheit übertragene Kontroll-Daten und speichert diese in der dritten Speichereinrichtung S3,
- überträgt die von der ihr zugeordneten (dritten) programmgesteuerten Einheit CORE11 erhaltenen und in der ersten Speichereinrichtung S1 gespeicherten Kontroll-Daten über den Ausgangsanschluß OUT2 und den dritten Bus B3 an die dritten Kommunikations-Controller der zweiten Bus-Einheit und der dritten Bus-Einheit,
- überprüft durch die Vergleichseinrichtung C, ob die in den Speichereinrichtungen S1 bis S3 gespeicherten Kontroll-Daten vorgegebene Bedingungen erfüllen,
- entscheidet durch die Entscheidungseinrichtung D abhängig vom Ergebnis des von der Vergleichseinrichtung durchgeführten Vergleichs, ob die zugeordnete programmgesteuerte Einheit CORE11 in Betrieb bleiben bzw. weiterarbeiten kann oder deaktiviert werden muß,
- steuert über den Ausgangsanschluß OUT1 und das UND-Glied AND die zugeordnete programmgesteuerte Einheit CORE11 entsprechend der von der Entscheidungseinrichtung D getroffenen Entscheidung an,
- übermittelt die von der Entscheidungseinrichtung D getroffene Entscheidung über den Ein- und Ausgabeanschluß IO und den dritten Bus B3 an die dritten Kommunikations-Controller der zweiten Bus-Einheit und der dritten Bus-Einheit, und
- empfängt über den Ein- und Ausgabeanschluß IO die Entscheidungen, die durch die in den dritten Kommunikations-Controllern der zweiten Bus-Einheit und der dritten Bus-Einheit enthaltenen Entscheidungseinrichtungen D getroffen wurden und durch die jeweiligen Kommunikations-Controller über den dritten Bus B3 zur ersten Bus-Einheit BU11 übertragen werden.

Es dürfte einleuchten, daß die beschriebenen Anordnungen mannigfaltig modifizierbar sind. Insbesondere besteht keine Einschränkung darauf,
- daß die zu überwachenden Systemkomponenten Bestandteil eines Anti-Blockier-Systems sind (die zu überwachenden Systemkomponenten können auch Bestandteil beliebiger anderer Systeme sein),
- daß die zu überwachenden Systemkomponenten einen identischen Aufbau aufweisen und identisch betrieben werden (auf die beschriebene Art und Weise können auch Systemkomponenten überwacht werden, die einen unterschiedlichen Aufbau aufweisen und/oder unterschiedlich betrieben werden und "nur" die selben oder einander entsprechende Aktionen ausführen),
- daß die zu überwachenden Systemkomponenten die selben Kontroll-Daten liefern (auf die beschriebene Art und Weise können auch Systemkomponenten überwacht werden, die "nur" einander entsprechende oder in einem bestimmten Verhältnis oder einer bestimmten Beziehung stehende Kontroll-Daten liefern)
- daß die zu überwachenden Systemkomponenten programmgesteuerte Einheiten sind (auf die beschriebene Art und Weise können auch beliebige andere Systemkomponenten überwacht werden),
- daß die zu überwachenden Systemkomponenten und/oder die ihnen zugeordneten Überwachungseinrichtungen über einen oder mehrere Busse miteinander verbunden sind (die zu überwachenden Systemkomponenten und die ihnen zugeordneten Überwachungseinrichtungen können an beliebigen Stellen des Systems vorgesehen und auf beliebige Art und Weise miteinander verbunden sein),
- daß die zu überwachenden Systemkomponenten und/oder die ihnen zugeordneten Überwachungseinrichtungen bei Verbindung über mehrere Busse über drei Busse miteinander verbunden sind (die zu überwachenden Systemkomponenten und die ihnen zugeordneten Überwachungseinrichtungen können über beliebig viele Busse miteinander verbunden sein), und
- daß die Überwachungseinrichtungen Bestandteil von Kommunikations-Controllern sind (die Überwachungseinrichtungen können auch Bestandteil anderer Einrichtungen oder separate Einrichtungen sein).

Auf die beschriebene Art und Weise kann unabhängig von den Einzelheiten der praktischen Realisierung unter allen Umständen zuverlässig erkannt werden, ob und gegebenenfalls welche der zu überwachenden Systemkomponenten fehlerhaft arbeitet.

### Bezugszeichenliste

- BUS: Bus
- BUx: Bus-Einheiten
- Bx: Busse
- C: Vergleichseinrichtung
- D: Entscheidungseinrichtung
- COMMx: Kommunikations-Controller
- COREx: programmgesteuerte Einheiten
- INx: Eingabeanschlüsse von COMMx
- IO: Ein-/Ausgabeanschluß von COMMx
- OUTx: Ausgabeanschlüsse von COMMx
- Sx: Speichereinrichtungen

## Patentansprüche

1. Anordnung zur Überwachung des ordnungsgemäßen Betriebes von die selben oder einander entsprechende Aktionen ausführenden Komponenten (COREx) eines elektrischen Systems, wobei jeder der zu überwachenden Systemkomponenten mindestens eine eigene Überwachungseinrichtung zugeordnet ist,
**dadurch gekennzeichnet,**
**daß** pro zu überwachender Systemkomponente mehrere Überwachungseinrichtungen vorgesehen sind,
**daß** jede Überwachungseinrichtung eine Entscheidungseinrichtung (D) enthält, durch welche entschieden wird, ob die Systemkomponente, welcher sie zugeordnet ist, weiterarbeiten darf oder deaktiviert werden muß,
**daß** die Ergebnisse der Entscheidungseinrichtungen (D) zwischen den Überwachungseinrichtungen über erste Ausgangsanschlüsse (IO) ausgetauscht werden,
**daß** die zu überwachenden Systemkomponenten (COREx) so aufgebaut sind und betrieben werden, daß sie die ihnen eigentlich obliegende Aufgabe nur erfüllen oder fortsetzen, wenn ihnen ein Freigabesignal zugeführt wird, und
**daß** das Freigabesignal durch eine logische UND-Verknüpfung von Steuersignalen gebildet wird, welche die Entscheidungseinrichtungen (D) abhängig davon, ob von den zu überwachenden Systemkomponenten (COREx) ausgegebene Kontroll-Daten vorgegebene Bedingungen erfüllen oder nicht, erzeugen und über zweite Ausgangsanschlüsse (OUT1) ausgeben.

2. Anordnung nach Anspruch 1,
**dadurch gekennzeichnet,**
**daß** die Überwachungseinrichtungen basierend auf einer Gegenüberstellung von Kontroll-Daten, die ihnen von der jeweils zugeordneten Systemkomponente (COREx) und von den jeweils anderen Systemkomponenten (COREx) und/oder von den diesen zugeordneten Überwachungseinrichtungen zugeführt werden, festlegen, ob die jeweils zugeordnete Systemkomponente ordnungsgemäß arbeitet.

3. Anordnung nach Anspruch 1 oder 2,
**dadurch gekennzeichnet,**
**daß** die Überwachungseinrichtungen die von den zu überwachenden Systemkomponenten (COREx) und/oder von den diesen zugeordneten Überwachungseinrichtungen erhaltenen Kontroll-Daten daraufhin untersuchen, ob sie vorgegebene Bedingungen erfüllen.

4. Anordnung nach Anspruch 3,
**dadurch gekennzeichnet,**
**daß** die Überwachungseinrichtungen überprüfen, ob die von den zu überwachenden Systemkomponenten (COREx) und/oder von den diesen zugeordneten Überwachungseinrichtungen erhaltenen Kontroll-Daten übereinstimmen oder einander entsprechen.

5. Anordnung nach Anspruch 3,
**dadurch gekennzeichnet,**
**daß** die Überwachungseinrichtungen überprüfen, ob die von den zu überwachenden Systemkomponenten (COREx) und/oder von den diesen zugeordneten Überwachungseinrichtungen erhaltenen Kontroll-Daten in einem vorbestimmten Verhältnis oder einer vorbestimmten Beziehung zueinander stehen.

6. Anordnung nach Anspruch 3,
**dadurch gekennzeichnet,**
**daß** die Überwachungseinrichtungen überprüfen, ob die von den zu überwachenden Systemkomponenten (COREx) und/oder von den diesen zugeordneten Überwachungseinrichtungen erhaltenen Kontroll-Daten vorbestimmte Daten sind.

7. Anordnung nach einem der Ansprüche 3 bis 6,
**dadurch gekennzeichnet,**
**daß** im Fall, daß die Kontroll-Daten einer der zu überwachenden Systemkomponenten (COREx) die vorgegebene Bedingung nicht erfüllen, veranlaßt wird, daß die betreffende Systemkomponente nicht weiterarbeitet.

8. Anordnung nach Anspruch 7,
**dadurch gekennzeichnet,**
**daß** die Veranlassung, daß die betreffende Systemkomponente (COREx) nicht weiterarbeitet, durch eine der Überwachungseinrichtungen erfolgt, die der betreffenden Systemkomponente zugeordnet sind.

9. Anordnung nach einem der vorhergehenden Ansprüche,
**dadurch gekennzeichnet,**
**daß** die zu überwachenden Systemkomponenten (COREx) programmgesteuerte Einheiten sind.

10. Anordnung nach einem der vorhergehenden Ansprüche,
**dadurch gekennzeichnet,**
**daß** die zu überwachenden Systemkomponenten (COREx) Bestandteil von verschiedenen Bus-Einheiten (BUx) eines Bus-Systems sind.

11. Anordnung nach Anspruch 10,
**dadurch gekennzeichnet,**
**daß** die Überwachungseinrichtungen Bestandteil der Kommunikations-Controller (COMMx) der Bus-Einheiten (BUx) sind, durch welche zu anderen Bus-Einheiten zu übertragende Daten auf den Bus (BUS, B1 - B3) ausgegeben werden, und durch welche über den Bus zu der betreffenden Bus-Einheit übertragene Daten entgegengenommen werden.

12. Anordnung nach Anspruch 10 oder 11,
**dadurch gekennzeichnet,**
**daß** die die zu überwachenden Systemkomponenten (COREx) enthaltenden Bus-Einheiten (BUx) über mehrere Busse (B1 - B3) miteinander verbunden sind.

13. Anordnung nach Anspruch 12,
**dadurch gekennzeichnet,**
**daß** die Bus-Einheiten (BUx) eine der Anzahl der Busse (B1 - B3) , über welche sie miteinander verbunden sind, entsprechende Anzahl von Kommunikations-Controllern (COMMx) enthalten, wobei jeder Kommunikations-Controller mit einem anderen Bus verbunden ist.

14. Anordnung nach Anspruch 13,
**dadurch gekennzeichnet,**
**daß** in jedem der Kommunikations-Controller (COMMx) eine Überwachungseinrichtung vorgesehen ist.

## Claims

1. Arrangement for monitoring the correct operation of components (COREx) of an electrical system that perform the same or corresponding actions, wherein each of the system components to be monitored has at least one associated monitoring device of its own,
**characterized**
**in that** a plurality of monitoring devices are provided per system component to be monitored,
**in that** each monitoring device contains a decision-making device (D) that decides whether the system component with which it is associated can continue to operate or needs to be deactivated,
**in that** the results from the decision-making devices (D) are exchanged between the monitoring devices via first output ports (IO),
**in that** the system components (COREx) to be monitored are designed and operated such that they perform or continue the task that actually rests on them only when they are supplied with an enable signal, and
**in that** the enable signal is formed by logic ANDing of control signals that the decision-making devices (D) produce and output via second output ports (OUT1) on the basis of whether or not control data that are output by the system components (COREx) to be monitored satisfy prescribed conditions.

2. Arrangement according to Claim 1,
**characterized**
**in that** the monitoring devices stipulate whether the respectively associated system component operates correctly on the basis of a comparison of control data that are supplied to them by the respectively associated system component (COREx) and by the respective other system components (COREx) and/or by the monitoring devices associated therewith.

3. Arrangement according to Claim 1 or 2,
**characterized**
**in that** monitoring devices examine the control data obtained from the system components (COREx) to be monitored and/or from the monitoring devices associated therewith for whether they satisfy prescribed conditions.

4. Arrangement according to Claim 3,
**characterized**
**in that** the monitoring devices check whether the control data obtained from the system components (COREx) to be monitored and/or from the monitoring devices associated therewith match or correspond to one another.

5. Arrangement according to Claim 3,
**characterized**
**in that** the monitoring devices check whether the control data obtained from the system components (COREx) to be monitored and/or from the monitoring devices associated therewith have a predetermined ratio or predetermined relationship to one another.

6. Arrangement according to Claim 3,
**characterized**
**in that** the monitoring devices check whether the control data obtained from the system components (COREx) to be monitored and/or from the monitoring devices associated therewith are predetermined data.

7. Arrangement according to one of Claims 3 to 6,
**characterized**
**in that** if the control data from one of the system components (COREx) to be monitored do not satisfy the prescribed condition then the relevant system component is prompted not to continue operating.

8. Arrangement according to Claim 7,
**characterized**
**in that** the prompt for the relevant system component (COREx) not to continue operating is provided by one of the monitoring devices that are associated with the relevant system component.

9. Arrangement according to one of the preceding claims,
**characterized**
**in that** the system components (COREx) to be monitored are program-controlled units.

10. Arrangement according to one of the preceding claims,
**characterized**
**in that** the system components (COREx) to be monitored are part of different bus units (BUx) in a bus system.

11. Arrangement according to Claim 10,
**characterized**
**in that** the monitoring devices are part of the communication controllers (COMMx) of the bus units (BUx) that output data to be transmitted to other bus units onto the bus (BUS, B1-B3) and that receive data transmitted to the relevant bus unit via the bus.

12. Arrangement according to Claim 10 or 11,
**characterized**
**in that** the bus units (BUx) containing the system components (COREx) to be monitored are connected to one another via a plurality of buses (B1 - B3).

13. Arrangement according to Claim 12,
**characterized**
**in that** the bus units (BUx) contain a number of communication controllers (COMMx) that corresponds to the number of buses (B1 - B3) via which said bus units are connected to one another, each communication controller being connected to a different bus.

14. Arrangement according to Claim 13,
**characterized**
**in that** each of the communication controllers (COMMx) contains a monitoring device.

## Revendications

1. Dispositif destiné à surveiller le fonctionnement correct de composants (COREx) exécutant des actions identiques ou se correspondant mutuellement d'un système électrique, dans lequel un dispositif de surveillance unique est associé à chacun des composants systèmes à surveiller, **caractérisé en ce que** plusieurs dispositifs de surveillance sont prévus pour chaque composant système à surveiller,
**en ce que** chaque dispositif de surveillance comporte un dispositif de prise de décision (D) au moyen duquel il est décidé si les composants systèmes auxquels il est associé doivent continuer à fonctionner ou doivent être désactivés, **en ce que** les résultats des dispositifs de prise de décision (D) sont échangés entre les dispositifs de surveillance par l'intermédiaire de premières bornes de sortie (IO),
**en ce que** les composants systèmes à surveiller (COREx) sont conçus et mis en fonctionnement de manière à ce qu'ils n'effectuent ou poursuivent les tâches qui leur incombent que si un signal d'autorisation leur est fourni et
**en ce que** le signal d'autorisation est créé par une combinaison logique ET de signaux de commande que les dispositifs de prise de décision (D) génèrent en fonction du fait que des données de contrôle délivrées par les composants systèmes à surveiller (COREx) satisfont ou non à des conditions prédéterminées et qui sont délivrés par l'intermédiaire de secondes bornes de sortie (OUT1).

2. Dispositif selon la revendication 1,
**caractérisé en ce que** les dispositifs de surveillance établissent, sur la base d'une comparaison des données de contrôle qui leur sont fournies par les composants systèmes (COREx) qui leur sont respectivement associés et par les autres composants systèmes (COREx) respectifs et/ou par les dispositifs de surveillance qui leur sont associés, si les composants systèmes respectivement associés fonctionnent correctement.

3. Dispositif selon la revendication 1 ou 2,
**caractérisé en ce que** les dispositifs de surveillance analysent les données de contrôle obtenues par les composants systèmes à surveiller (COREx) et/ou par les dispositifs de surveillance qui leur sont associés pour déterminer s'ils satisfont aux conditions prédéterminées.

4. Dispositif selon la revendication 3,
**caractérisé en ce que** les dispositifs de surveillance vérifient si les données de contrôle obtenues par les composants systèmes à surveiller (COREx) et/ou par les dispositifs de surveillance qui leur sont associés concordent ou se correspondent mutuellement.

5. Dispositif selon la revendication 3,
**caractérisé en ce que** les dispositifs de surveillance vérifient si les données de contrôle obtenues par les composants systèmes à surveiller (COREx) et/ou par les dispositifs de surveillance qui leur sont associés présentent un rapport prédéterminé ou une relation prédéterminée les uns par rapport aux autres.

6. Dispositif selon la revendication 3,
**caractérisé en ce que** les dispositifs de surveillance vérifient si les données de contrôle obtenues par les composants systèmes à surveiller (COREx) et/ou par les dispositifs de surveillance qui leur sont associés sont des données prédéterminées.

7. Dispositif selon l'une quelconque des revendications 3 à 6,
**caractérisé en ce que** dans le cas où les données de contrôle de l'un des composants systèmes à surveiller (COREx) ne satisfont pas à la condition prédéterminée, il est fait en sorte que le composant système concerné ne continue pas à fonctionner.

8. Dispositif selon la revendication 7,
**caractérisé en ce que** la décision de faire en sorte que le composant système concerné (COREx) ne continue pas à fonctionner est prise par l'un des dispositifs de surveillance qui sont associés au composant système concerné.

9. Dispositif selon l'une quelconque des revendications précédentes,
**caractérisé en ce que** les composants systèmes à surveiller (COREx) sont des unités commandées par programmes.

10. Dispositif selon l'une quelconque des revendications précédentes,
**caractérisé en ce que** les composants systèmes à surveiller (COREx) font partie de différentes unités de bus (BUx) d'un système de bus.

11. Dispositif selon la revendication 10,
**caractérisé en ce que** les dispositifs de surveillance font partie des contrôleurs de communication (COMMx) des unités de bus (BUx) par l'intermédiaire desquels des données à transmettre à d'autres unités de bus sont délivrées sur le bus (BUS, B1 - B3) et par l'intermédiaire desquels sont reçues des données transmises à l'unité de bus concernée sont reçues sur le bus.

12. Dispositif selon la revendication 10 ou 11,
**caractérisé en ce que** les unités de bus (BUx) comportant les composants systèmes à surveiller (COREx) sont interconnectées par l'intermédiaire de plusieurs bus (B1 - B3).

13. Dispositif selon la revendication 12,
**caractérisé en ce que** les unités de bus (BUx) comportent un nombre de contrôleurs de communication (COMMx) correspondant au nombre des bus (B1 - B3) par l'intermédiaire desquels elles sont interconnectées, dans lequel chaque contrôleur de communication est connecté à un autre bus.

14. Dispositif selon la revendication 13,
**caractérisé en ce qu'**un dispositif de surveillance est prévu dans chacun des contrôleurs de communication (COMMx).
